# EUROPEAN PATENT APPLICATION

(11) **EP 1 507 201 A1**
(43) Date of publication of application: **16.02.2005**
(21) Application number: 03720080.5
(22) Date of filing: 27.03.2003
(51) Int. Cl.: G06F 9/46

(54) **A STRUCTURE AND MENTHOD OF SOFTWARE SIMULATING THE SEQUENCE NETWORK WHICH COMPRISES N+1 PARALLEL PROGRAM**

(30) Priority: 28.03.2002 CN 02108163
(71) Applicant: Xu, Zhaochang, Shanghai 200040 P.R. (CN)
(72) Inventor: XU, Zhaochang, Shanghai 200040 (CN); WU, Dongming, Shanghai 200040 (CN)
(74) Representative: Becker Kurig Straus
(86) International application number: PCT/CN2003/000222
(87) International publication number: WO 2003/083655

(57) **Abstract**

This invention relates to an embedding structure of parallel-program created by software and a call of parallel-program. The parallel-program relates to the "sequence-net" in the prior art in the view of programs and includes N+1 parallel-program branch program modules and (data) token structure. Based on a single machine environment of this invention, parallel-program is transformed into a type of structure of parallel-program branch program run in time division mode. Three subroutines for reading data, writing data, and making the consistency for data in the branch programs realize the processing of suspension and ready status of parallel-program branch programs. The running of branch programs is managed by time-division-managing module. An execution process of parallel-program data sequence supports the parallel operations and the embedding of parallel-program modules. The parallel-program structure simplifies the modular structure of time division and produces the resources of N+1th branch program.

## Description

### FIELD OF THE INVENTION

The current invention relates to computer technology. In particular, The current invention relates to a category of modular structure of computer software.

### BACKGROUND OF THE INVENTION

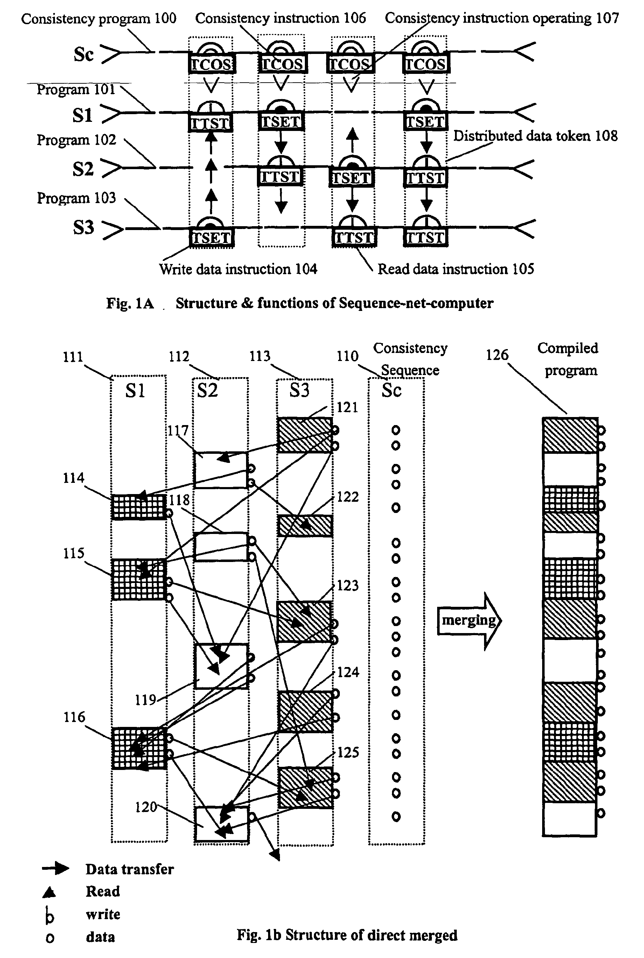

In prior arts, the parallel flow chart is considered as "N flows and the interconnections of data". In the Sequence-net-computers of the previous invention, considering that there are N+1 sequences in paralleled flow chart, and also considering that there is a structure of distributed data token, i.e. Sequence-net as shown in Fig. 1A. In the previous inventions, considering that in a computer realized parallel flow chart, N+1 sequences as fundamental elements correspond to the flows of N+1 hardware, and this fact is a fundamental for parallel processing computers. For maintaining functions of the parallel flow chart under the condition of N+1 flow sequence structure, a distributed token structure is adopted by the previous invention whose structure complies with the structure of the execution (data) token of N+1th flow-sequence. Hence, the computer structure has the feature that a structure of N+1 Flows is generated by the previous inventions as shown in Fig. 1A and known as Sequence-net-computers.

The structure of Sequence-net-computers includes N+1 parallel-programs and interconnected structure of distributed data tokens. In view of programming, Sequence-net is just a running controlling method with the utilization of N+1 parallel-programs (Hereinafter parallel-program is abbreviated as P-P) in place of the previous N programs. Therefore, in view of the running control, the Sequence-net is referred as "N+1 P-P" or "P-P" herein. At the same time, the processing structure of N parallel-programs in the prior arts is referred as "N P-P". Although the concepts of N+1 P-P and N P-P are different, the data transferred between branch programs are same. In this invention, the data mentioned in N+1 P-P and N P-P is referred as P-P data.

The N+1 P-P structure is shown in Fig. 1A, N+1 programs 100, 101, 102, and 103 (for brief purpose, N=3 herein) and four distributed (data) token 108 are included in parallel-programs. The newly added N+1th program 100 is also called consistency program. Distributed (data) token 108 acts for three new instructions, write data instruction TSET 104, read data instruction TTST 105, and P-P data consistency instruction TCOS 106. In the figure, the arrows denote routes of data transfer, 107 denotes the operation of consistency instruction of distributed token.
● When program S1, S2, or S3 perform the write data instruction TSET 104, writing the data. During writing data, token is set to 1, i.e. the execution of consistency operation for the parallel data is permissible.
● When the consistency program 100 performs the consistency instruction TCOS 106, consistency operation of the data of a P-P is executed. During the execution of consistency operation 107 of this distributed data token, the consistency operations of data and tokens are broadcasting inside the distributed data token 108 from the source 104. During the transmission process of consistency, checking whether the tokens are valid. If tokens are invalid, the consistency transmission will be re-activated until the tokens are valid again, and then the next instruction can be executed.
● When program S1, S2, or S3 performs the read data instruction TTST, reading the data. Meanwhile, checking whether the tokens are valid. If the tokens are invalid, the data will be read again until the tokens are valid. Then the next instruction can be executed.

It is obvious that in multi-machine structure, N+1 P-P relies on a new consistency program 100. With the support of the distributed data token structure, parallel operations within P-P include the synchronization and the data transfer of parallel branch programs. During the running, the transmission of a P-P data requires three instructions hosted in three different programs, and requires two successive operations of synchronized coordination. The three instructions are write data (for generating tokens), token consistency (for write tokens inspection and coordination), and read data (for token consistency inspection and coordination). Consistency program 100 is characterized that driving sequence operations of P-P data without the numerical calculation.

In fact, in a multi-machine structure environment, N+1 P-P relies on a new consistency program 100. In addition, the consistency program also supports the embedding function for P-P. Structurally, the embedding of P-P is making two P-Ps to have parent-child relationship. In the model of numerical computation, if there is no data interconnection (e.g. child P-P from outside interrupt event) with the father and child P-P, embedding can be realized in any position within N+1 branch programs of the father level. If the data relations do exist (as required by the program structure), the contextual relations should be required between the child (embedded) P-P and the father P-P by some kind of algorithm. For example, if an embedding called for child P-P was issued by #1 branch program, the child program computation requires that enough data is available in all N+1 branch P-P of father P-P. That is, each branch program of father P-P should be operated and go through certain program point, and then could be called by child branch P-P. It is required by the contextual data relations. In fact, it denoted that the call for child P-P (embedding) is serial, and two parameters were included in the call by child P-P: child P-P Call-instruction (for easy programming), and call permission control related to the running sequence of father P-P.

The above-mentioned N+1 program points define the permissible zone of call for child P-P. The difficulty for controlling the contextual relations by using N branch programs is higher than controlling the contextual relations by using consistency program 100 about one order of magnitude. The control includes establishing the permissible zone, the relation with the data sequence of P-P, and the applicable way of implementation. In fact, among them, P-P data sequence is the contextual data. In fact, there are lots of applicable methods for implementation, such as making the P-P data with specific statements in place of the call permissible signal for child P-P, and specially defining a new call-permission-instruction, etc.

Therefore, the keys for supporting the call of child P-P embedding are that the father P-P has a practical execution of the P-P data sequence, and the operation of the data sequence of P-P is controlled by a program structure. With the above mentioned characteristics, the permission for child P-P may be flexible under the program control, and the sequential relations between programming definitions and contextual data can be established. As for general structural capability, embedding capability of parallel-program is of utmost importance. Obviously, the N+1th program is the key condition for supporting P-P embedding.

The P-P module of Sequence-net-computers is characterized as follows:
● The structure of the P-P module in Sequence-net-computers is simple.
● The data sequence features of P-P modules supports the parallel computation of P-P. Data sequence is coming from the N+1th program Sc.
● Structural embedding between modules of P-P is allowable.
● Branch programs have an independent program modular structure.

Further, instruction of call P-P for single computer can be created to realize the embedding structure between P-P's. The call-permissible-instruction for child P-P in N+1th program can be created to realize call permission for child P-P.
● Instruction of call P-P can be created in single computer and call for P-P can be realized.
● One call instruction has the call capability for N+1 P-P.
● Currently available data structure of P-P data can be used to replace the call permission function for the child P-P.

In the Sequence-net-computers technology, there are N+1 branch parallel-programs in parallel flow chart. However, the common concept of people to the parallel flow chart is still that there are N flows. Because of the difference in concepts, the development of parallel technology in multi-machine environment is seriously impeded. Although the difference in concepts is rather small in a single machine environment and could not be easily perceivable, it can still be revealed structurally in certain conditions.

In view of N+1 P-P branch programs of net sequence computer, this invention relates to the two kinds of structures for P-P entering the single-machine environment as listed below.

In accordance with the principle of flow sequence matching of parallel computation, the parallel modules are featured with N+1 sequences and the computers should be supported by N+1 hardware flows for implementing N+1 flow sequence matching. In a single machine environment, there is only one flow for the computer. Therefore, in order to realize the flow sequence match, it should be necessary first to merge N+1 sequences into one sequence. The key point of the merging is to process the N+1 sequences in the way of time division. Although it has been understood in the past that the merging is merging N sequences, the merge is essentially merging N+1 sequences. Then there is a difference in actual operation and concept comprehension.

In previous technology, there are two different methods for merging N+1 sequences into a sequence, and then different structures are formed, as below. Fig.1B shows a simple structure of the direct combination. No independent structure of P-P branch programs is involved. Since the difference in the operations and concepts mentioned above is masked. In the structure of Fig. 1C, independent structure of branch programs is required, so the influence caused by above mentioned difference is extensively involved with and a N P-P structure is formed. In fact, the structure of the N P-P replaces the structure of the N+1 P-P.

Fig. 1B is a structure diagram of the sequence resulted by direct merging of N+1 sequences. It is a method of inseparable serial program formed by merging N+1 branch programs. Though the computation results are not changed, the operational processes are different. So it is a problem in the category of computation process.

As shown in Fig. 1B, S1 111, S2 112, and S3 113 are programs decomposed into program sections of 114-125. The diagrams at right sides of sections denote a parallel data produced by respective program sections (produced by write data instruction 104). Arrows denotes the positions (of read data instruction 105) to be used in other program sections by parallel data. Then the sectionalized sections are re-combined again. The condition for recombination is the combined sequences matched with all the N+1 sequences. Obviously all arrows must be in downward direction. It is characteristic that a serial program 126 is produced after the sequence of consistency sequence Sc 110 of P-P data is merged.

In the concept of N P-P, there was no N+1th sequence Sc110. As no relation existed between Sc and results of numerical computation, and in a single machine environment, no transmission for consistency data is needed. The only condition needed is that the single machine program after merging 126 should be satisfied with the relations between all the N+1 sequences. Therefore, in view of the concepts of N P-P or N+1 P-P, the results obtained from the above mentioned merging for realizing data computations are same. This may be another reason for ignoring the concept of N+1 in long time.

In single machine environment, the way of merging shown in this figure is the most common method. In short, the N+1th flow sequence is the sequence for reading a data after writing this data. After merging, a P-P module is changed into a usual (child) subroutine module in a single machine environment.

After merging, if the P-P module is an interrupt program or subroutine, the program under running is also a merged parallel-program module. This is equivalent to realize the embedding of P-P modules. The distributed call-instruction and the serial call-permission-instruction are two conditions for the call of child P-P in (multi-machine) Sequence-net-computers environment, so that the contextual relations in algorithm can be satisfied. However, in the single machine environment of Fig. 1B, the N+1 sequences are merged into one sequence. The position of call instruction is implicit in the call-permission-instruction so that the contextual relations in algorithm can be satisfied. Of course, all the statements are just the explanations in view of this invention to commonly known interrupt program or call subroutine programs in a single machine environment.

The process of directly merging N+1 sequences of a P-P module structure into one sequence is very simple. It may be the support of parallel computation (synchronized running, etc.), may also be the support of embedding characteristics for P-P which are the advantages of Fig. 1B. However, the P-P data sequence of N+1th sequence Sc must has a fixed sequence structure and the call position for child P-P must also be fixed, which leads to make the above mentioned merging methods be suitable for computation but not be suitable for management of multiple programs. No independent modular structure of P-P branch programs is another disadvantage which is harmful for realizing (in certain specific circumstances) some functions such as loading or unloading branch programs.

As mentioned above, the structure has the following features:
● The P-P module has a simple structure
● The P-P module has computation function, which is restricted by the fixed P-P data sequence.
● The P-P module allows the embedding between P-Ps.
● The program structures of P-P branch programs in P-P modules are not independent modules.

In some applications, P-P branch programs should be kept the status of independent modules at the machine code level (for example, loading and unloading operations to branch programs is needed). The theory in the previous technology is based on the concept of N flows in parallel flow chart. N branch programs of N P-P have independent structure. Under single machine environment, there is a simple idea that N branch programs could be run in time division mode. A managing module is needed for time division mode. So a structure consisting of N P-P managing module 130 and branch programs 131, 132, and 133 of N independent structures, as shown in Fig. 1C. In order to keep the consistency between concepts of independent P-P branch programs and traditional programs, N P-P managing module 130 should not be a simple issue of time division and following problems should be solved:
● Time division management of N P-P branch programs.

It is a well-known algorithm model. The N P-P managing module 130 is a father level, and N P-P branch programs are at child level. The module 130 performs time division scheduling which selects the running of one P-P branch program. In the running of the branch program, if the running fails due to not meeting the conditions, the branch program enters automatically into suspension status. The running then returns back to module 130 so that next P-P branch program could be selected. The processes repeat until all P-P branch programs are executed and the operations of N parallel module managing module 130 are terminated. Then the process quits. Therefore, the structure of the pure time division management is not complex.

If the N P-P's are of parallel computation programs, there must be a right data sequence existed for the requirements for data interchanging. So N P-P can be executed by above-mentioned structure of time division computation. However, sequence of P-P data in actual execution in not controlled under the managing of P-P managing module 130. In other words, the actual P-P data sequence is indeterminate. The indeterminate data sequence of parallel-programs makes the contextual relations very difficult to handle, which is needed in embedding of N P-P's. Meantime, as there is no N+1th program, call instruction for N P-P distributed in various branch programs can not be permitted by sequencing call-instruction with P-P data sequence. The embedding capability between N P-P's is affected.
● Running synchronization in N P-P branch programs

In accordance with the invention, essentially, the synchronization is the execution of correct P-P data sequence.

There is no N+1th consistency program and instruction in the structure of N P-P, hence the general condition of three steps for a data transfer, i.e. "write", "consistency", and "read", is transformed into a structure of two steps, such as "write_consistency" and "read". Objectively, during the execution of "write_ consistency" in all branch programs, all the distributed "write-consistency" operations should be featured with a correct data sequence relations in P-P's. If finding out the fail of reading data, the respective branch program should be suspended and be back to P-P managing module 130 of father-leveled N parallel-programs. By scheduling of module 130, all branch programs can be executed, and operations of P-P can be performed. In these processes, the data sequence of all branch programs should be in consistent logically, any fault is not permitted.
● Data communications between N P-P branch programs

There are many methods for the communications between P-P branch programs. In case of adopting structure of communication package, the structure and explanation for communication package are also entered into the structure of module 130. Their processes are different from the synchronization management of programs. Of course, data communications could be independently managed and separated from N P-P managing module 130.

In previous technology, N parallel programming had been actually a matter of software design. Some structures are not disclosed yet. So the comments made by this paper may not be accuracy. However, after all, no P-P data sequence and independent N+1th program are existed in N P-P running. So the embedding capability and parallel computation capability of N P-P's are influenced. Besides, in actual running of N P-P's, some content similar to the management of N+1th flow sequence must be included implicitly and be effective to other structures. For example, message queue is a communication mode between processes and is a queue of interconnected message; however, it is not a program and has not the driving capability for actively running.

N P-P is summarized as follows:
● N P-P managing modules are featured with too much function and the structure is too complicated.
● N P-P's support parallel computation. However because its connection of branch programs is based on communications, there are limitations on granularity and parallel functions.
● The embedding relations between N P-P's are difficult to realize.
● N P-P branch programs are with independent structure and support loading and unloading of branch programs.

Compared with the Sequence-net functions of Fig. 1A, N P-P in single machine are inferior to multi-machine system for parallel characteristics.
● The difference between single machine environment and multiple machine environments.
● N P-P is rather complicated in structure.
● There is no P-P data sequence in N P-P operations, and no capabilities for synchronization and computation supported by P-P data sequence.
● In N P-P, no N+1th program is available to support the call-permission-instruction of "child N P-P". So call-instruction of N P-P cannot combine with P-P data sequence. The contextual relation needed by embedding is difficult to realize.
● Independent branch program structure is existed in N P-P.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### SUMMARY OF THE INVENTION

Previous technology of Sequence-net-computer showed that N+1 P-P are with the natural characteristic of parallel flow chart. In P-P, N+1 branch programs running in a same level. Synchronization and data transfer are realized and controlled by N+1 P-P branch programs. Besides, N+1 P-P branch programs also support the embedding of P-P. When the structure according to the invention is performed in single machine environment, above-mentioned N+1 P-P branch programs should be running independently. Featured running of synchronization and data processing and supports to embedding structure of P-P should be maintained. When these characteristics are maintained, only an additional time-division-managing module for N+1 P-P branch programs is needed in structure. Management of simple time division is easy to manage. The waiting status of N+1 branch program of Sequence-net-computer should be converted to suspension, ready and other structures similar to process, etc. The time-division-managing module is definitely pertaining to a level, which is different from that of the P-P branch programs. Comparing with N P-P structure of previous technology shown in Fig. 1C, the N+1th P-P branch program is an actively operated program for executing the P-P data sequence and is a program supporting embedding of N+1 P-P's. It is obvious that the intrinsic characteristic of structure is satisfied and then the N+1 P-P structure becomes a structure of general category.

P-P is a type of structure in conformity with the natural features of a model, in multiple machine environments, Sequence-net-computers is a type of computer model in conformity with such a natural law. In single machine environment, characteristics in conformity with such natural law should also be established.

Therefore, the object of this invention is to establish a P-P structure featuring with N+1 running programs. In which, the N+1th P-P branch program is a program executing programs of P-P data sequence and supporting embedded structure of P-P.

According to the object of this invention, P-P structure in a single machine environment is to be established. This P-P structure includes:
● Simple P-P time-division-managing module for processing N+1 P-P branch programs.
● Establishing P-P data sequence in N+1th P-P branch program, realizing functions of running synchronization and data transmission in parallel computations.
● Supporting embedding relation between P-P's.
● Independent modular structure of N+1 branch programs.

The above mentioned four functions not only have the all advantages of Fig. 1A, Fig. 1B, and Fig. 1C into a single item, but also have new advantages of integration.

The objects of this invention are to establish a reasonable distribution structure for parallel functions, and to create new computation resources after realizing the above-mentioned. The additional advantages are as follows:
● Using "P-P data sequence" controlled by the N+1th program and call-permission-instruction for child P-P to present procedural features of the parallel operations.
● Having the resources of N+1th program with more capability.
● Having the modules for P-P time-division-management with more capability.

### BRIEF DESCRIPTION OF THE DRAWINGS

The present invention is illustrated by way of example, and not by way of limitation, in the figures of the accompanying drawings and in which like reference numerals refer to similar elements and in which:
Fig.1A illustrates a structure and functions of Sequence-net-computers of previous technology.
Fig.1B is a structural diagram showing a sequence is formed by directly merging N+1sequences in previous technology.
Fig.1C is a structure diagram for N P-P in previous technology.
Fig.2A is a structure diagram for N+1 P-P of this invention.
Fig.2B is a practical structure diagram for N+1 P-P in this invention.
Fig.2C is a flag structure diagram for P-P in this invention.
Fig.2D is a flag structure diagram for P-P data in this invention.
Fig.3A is a flow chart of P-P management program in this invention.
Fig.3B is a flow chart for write data subroutine in this invention.
Fig.3C is a flow chart for data consistency subroutine in this invention.
Fig.3D is a flow chart for read data subroutine in this invention.
Fig.3E is a structural diagram for N+1 P-P branch programs in this invention.

### DETAILED DESCRIPTION OF THE INVENTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

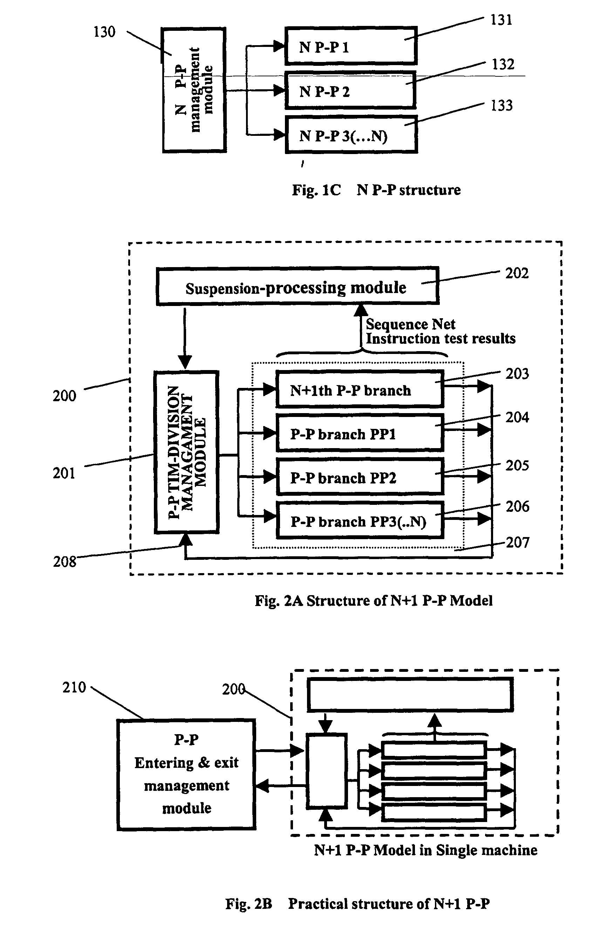

Fig. 2A is a structure diagram for N+1 P-P of this invention. It shows a practical example for implementing a kind of previous technology of "a parallel modular structure and its method of parallel processing based on distributed structure" realized by software. It is also the general structure for realizing P-P in single machine environment.

The structure according to the invention includes a time-division-managing module 201, a N+1 P-P branch program module 207, and a P-P branch program suspension-processing module 202. Refer to Fig. 1A, the procedure for realizing P-P in single machine environment is to maintain N+1 independent branch program structure 207, to keep operational synchronization and data transmission capability between P-P branch programs of Fig. 1A. On this basis, the branch programs are managed in time division. Time division management is used to control the time division operation of branch programs by using the statuses of suspension, ready, and running.

Only one branch program in N+1 P-P branch program module 207 can be run every time. Three types of Sequence-net instructions (i.e. read P-P data, write P-P data, and P-P data consistency), which originally exist in this branch program, will be replaced with three software subroutines in the invention. Among which, write P-P data subroutine can be executed directly, however, as for read P-P data and P-P data consistency subroutine, they should be checked to confirm whether they can be executed. If the data is invalid, the execution of branch program in module 207 will be stopped and suspended, the procedure turns to the module 202. If this P-P branch program is terminated, the procedure turns to the module 201 via 208.

In module 207, the P-P branch programs, which are not run, are in condition of "ON" or "OFF". "ON" includes a suspension status and a ready status. Every branch program has specific memory zones for its corresponding data, program address. These concepts are common in well-known management for process or thread. The sequence of P-P data executed by N+1th branch program 203 is a new content; however, the processing ways on suspension and ready are same.

The branch program suspension-processing module 202 receives information that is not operable by the branch programs of the P-P branch program module 207. The information includes a read data invalid and a data consistency invalid. The consistency invalid indicates that this P-P data has never been written. The read invalid indicates that this P-P data has never been operated with consistency. The above state indicated by the information will be presented when checking the P-P data flags in relevant subroutines, and indicates that this branch program can no longer be run. The branch program suspension-processing module 202 suspends the current P-P branch programs and saves the current situation information (such as addresses, schedules, time, etc) for restoring, the procedure transfers to the module 201.

The time division module 201 is used to select a new branch program of P-P. The time-division-module 201 has all status information of the P-P branch programs, which comprises suspension, ready, and ON/OFF status of various branch programs. The information is updated timely. For example, write P-P data subroutine may check if the position of this data is processed by the invalid consistency to suspend the N+1th branch program 203, if the some branch programs such as N+1th branch program 203 are suspended, the branch programs suspended will be changed to the ready status from the suspension status. In accordance with certain rule of priority, the time division module selects P-P of branch program of next branch module 207 in ready status. Then this branch program is restored and run. The time-division-managing module does not directly process the synchronization or data communications of the P-P branch programs.

The module 207 may select the next P-P branch programs. In accordance with different requirements, the module 207 may have different design measures of different rules of priorities. For example, in establishing priorities in time queue, the branch programs starting first can be executed with priority.

When the running of all branch programs is terminated, the time-division-managing module 201 is ceased to select the branch program. The fact of all P-P branch programs in suspension denotes that P-P in whole cannot be in running. Time-division-managing module 201 is also terminated. P-P returned back to higher level or waited for data input, etc.

The difference between this invention and the core structure of Fig. 1C is that, the N+1 P-P has the N+1th branch program 203, has N+1 programs running parallel, and N+1 programs are in same level. The N+1th P-P branch program executes a sequence of the P-P data, which is expressed by (data) consistency instruction. The characteristics of P-P data sequence and independent structure were stressed and entirely different from the data computation processed by other N branch programs. In previous technology, the N+1th program is a program including a "data and token consistency" instruction, which performs the operations of data consistency and token consistency between multiple machines (transmission data and token, and test token). In single machine software environment, this instruction is converted to a consistency subroutine, the token (hardware) is also changed to flag (software) of P-P data and is replaced with memory. The test of token is also changed to software test of flag. In the meantime, in single machine environment, the transmission of data and token is also changed; transmission operation of P-P data is no longer needed. However, the operation of token consistency is still needed. In software condition of this invention, token consistency is the operation of flag bit of P-P data.

Token consistency operation of N+1th branch program is corresponding to P-P data, and P-P data is directly going to consistency one by one by N+1th program controlling. The executable condition for P-P data consistency is that the P-P has to be written by other P-P branch program. Otherwise this P-P branch program should be go to suspension. After consistency executed, the P-P data should be in valid state at the time of reading by other branch program. Otherwise that P-P branch program for reading P-P data should be going to suspension.

N+1th branch program is a program. For a program resource, after consistency operation and P-P data sequence established, there are still many program resources are available. Of course, the utilization of these resources is beyond the scope of pure need of P-P flow chart computation. In respect to P-P embedding and child P-P call, N+1th program can connect and control the relation between call-permission-instruction of P-P and P-P data sequence. Here, P-P data sequence can provide data contextual relations required by algorithm for child P-P call. N+1th program of this invention is featured with driving capability of active operations. Therefore, synchronization of branch programs and management of P-P data status can be realized by N+ 1 program. Besides, P-P embedding is also supported.

In single machine, three Sequence-net instructions of P-P are substituted by three subroutines. Subroutines replace the original instructions of write, read, and consistency. Therefore, N+1 P-P 207 contained internally three specific P-P subroutines to process operations of read, write, and consistency for P-P. Subroutines are featured with capabilities of token set up, test, and processing, in addition to supporting synchronization and P-P data transmission of P-P branch programs. Under software simulation, each P-P data needs a set of P-P data flag.

Independent modular structure of P-P branch programs is one of the goals of this invention. They should be independent modular structure not only in programming but also in machine codes of the programs.

The time-division-managing module 201 can be encapsulated in one package with N+1 branch program 207, and then will be a part of N+1 P-P module 200, therefore the operation of N+1 P-P module 200 does not need the management of operation system. As functions of time division, synchronization, and data interconnection management are contained internally, therefore embedding of P-P can be formed.

In this invention, the user programs interface is the N+1 P-P branch programs 207, in which the N programs are regular single machine programs. In the N programs, data transferring between programs is implemented by the write/read of P-P data. It is the same as the write/read concepts in shared memory. In compiling stage, write or read of shared memory is transformed into the subroutine for write/read by compiling software. N+1th program executes the consistency operation of above-mentioned P-P data without numerical computation. A consistency operation consists of a P-P data. In user's programming, the only operation needed is to sequentially writing P-P data or consistency instructions of P-P data. Comparing the N P-P of Fig. 1C, the sequence of P-P data is a new type of input information and is executed by the program driving.

The operation process of module is as follows: the function of time-division-managing module 201 is to define a P-P branch program and drive it into running. In all the N+1 P-P branch programs, N+1th branch program 203 is different in functions from the function of other N P-P branch programs.

Module 201 defines the operations of N P-P branch programs 204, 205, and 206, After a P-P branch program entered into program running, if conditions are satisfied, the running can be going on to the end. After the end of branch programs and back to time-division-managing module 201, the module 201 makes decision again and enters into next P-P branch program in ready condition.

If write data or read data was happened with P-P branch program, the processing is as follows:
● During data read, if the P-P data valid, the read data is finished and next instruction is entered. If P-P data invalid (the data came from another P-P branch program), branch program should be quit from running. The subroutine of data read automatically set up a flag of "had been read invalid" and operation was changed to module 202. In module 202, the status of the P-P branch program was protected. The branch program was exited and the operation changed to time-division-managing module 201. Selection will be made again for new P-P branch program in ready conditions.
● After data written in, flag "consistency valid" of data should be set up. In the meantime, the flag of "consistency had been invalid" of the data should be checked. If valid, indicating that N+1th branch program 203 had already been failed to process the consistency of this data and the situation of suspension was entered. If invalid, subroutine of write data changed the status of consistency branch program from suspension to ready, the P-P branch program running continuously. Subroutine write-data could not set P-P branch program into suspension.

Module 201 defines the operations of N+1th branch program 203, as follows: Before executing the consistency of a P-P data, the flag of "consistency valid" of the P-P data should be tested.
● If flag invalid, subroutine of consistency set up "consistency had been invalid" flag and operation changed to module 202. Status of the N+1th branch program 203 was protected by module 202. The branch program was exited and the operation changed to time-division-managing module 201. Selection will be made again for new P-P branch program in ready conditions.
● If flag valid, operation changed to execution of data consistency. As there is no data transmission in single machine environment, consistency operation is in fact the processing of flag bit. The processing included setup of flag "read valid", check of all N P-P branch programs for flag "had been read invalid" for the data. Based on results of check up, status of relevant P-P branch programs was changed from suspension to ready. And then consistency branch program worked continuously.

When time-division-managing module 201 performed the running of all N+1 P-P branch programs 203, 204, 205, and 206, the running of P-P are concluded.

Therefore, the characteristics of this invention are summarized as follows: In single machine environment, a P-P will include modules of N+1 P-P branch programs, and time-division-managing module 201. Besides, there are also three sub-routines, "write P-P data", "read P-P data", and "P-P data consistency".
● Based on processing rules of parallel program synchronization, Invalid read data waiting should be emulated by software in single machine.
● Based on transmission rules of P-P data token, Consistency invalid should also be emulated by software in single machine.

Functions of P-P branch program managing module 201 include only time-division-management introduced by single machine environment.
● Synchronization of parallel programs needs to establish the waiting state and running state of P-P branch programs.
● Under time-division, the waiting state of P-P branch program is changed into states of ready, suspension, and running management.

Above description on structure of this invention include in fact two basic conditions of P-P embedding:
● There is N+1th independent program.
● Operations of P-P data sequence are managed in N+1th program.

Call of child P-P needs the realization of contextual connections in N+1 branch programs of father P-P. Two conditions for call are needed:
● Call instruction for child P-P in father leveled parallel-program branch programs.
● Child P-P call-permission-instruction in P-P data sequence (in representing contextual data).

N+1th branch program of P-P can do programming, controls, realization of call-permission-instruction of child P-P, and realization of the blending with P-P data sequence. Therefore, N+1 P-P is a structure supporting P-P's embedding.

Obviously, the features of this invention include:
● Simple structure of P-P time-division-management used to process N+1 P-P branch programs.
● Parallel data sequence established by N+1th P-P branch program. Functions of operations synchronization and data transmission are realized.
● P-P and embedding relations between P-P's are supported.
● N+1 branch programs of P-P are of independent modular structure.

The above-mentioned advantages are the results of transplanting advantages of multiple machines P-P of Sequence-net-computers into the environment of single computer.

In programs of single machine, Fig. 2A indicated that the P-P modular structure and functions shown in Fig. 1A can be realized with serial program of single machine. To realizing contextual software connection, a P-P entering & exit management module 210 is added on the basis of Fig. 2A, as shown in Fig. 2B.

Fig. 2A is in fact illustrated P-P had already featured with miniaturized process (or thread) management capability. Each P-P in practical application should be initialized. Each P-P has a corresponding flag zone. Initialization is to make filling processing to all P-P flag as initial data. In the initiation of running, if it is needed to establish initialized structure parameters of N+1 P-P branch program, including number of N branch programs, addresses of entry ports of branch programs, and other initialized parameters. A P-P entering management module is needed for the needs of management.

The exit of P-P is also treated for different conditions. When P-P is treated as a subroutine, the exit after execution is just the same as average subroutines. If P-P exited in the status of suspension of all branch programs, then the reasons may be various. One possible condition is that the P-P was initiated by a P-P call instruction of father-level P-P branch programs. The suspension of all branch programs of the P-P is actually indicating that the branch program of father P-P entered into suspension. The branch program should be exited and transferred to the running of other branch programs of father P-P. Another condition is that the P-P is waiting for external input information. Therefore, P-P should be entering into cyclic waiting condition. The third condition is that, fault was occurred in the design of operation of P-P, operation should be transferred into automatic fault correction control or process of faults displaying. A management module for P-P exit is needed for the management.

Therefore, a P-P entering & exit management module 210 was included in implementation examples of this invention. Module 210 and time-division-managing module 201 can be designed into one package.

In single machine environment, a practical package for P-P included module 210 and module 200. After user wrote N+1 P-P branch program, During compiling process, the compile tool of P-P will automatically add in P-P entering & exit management module 210 and time-division-managing module 201 to each P-P, including P-P flag and memory space for all P-P flags . Finally, three subroutines are used to substitute the expression format of reading and writing shared memory.

Similar to previous technology, the presence of P-P in software was shown in Fig. 1B and Fig. 1C. Fig. 2B showed a more generalized structure.

As P-P are featured with the capability of combining branch programs, generalized structure, and embedding characteristics. This invention supposed that P-P will be in the future a generalized component in modeling or programming. Simplified or reinforced P-P modules will find wide applications from subroutine to system programs, from operating system to users programs, etc.

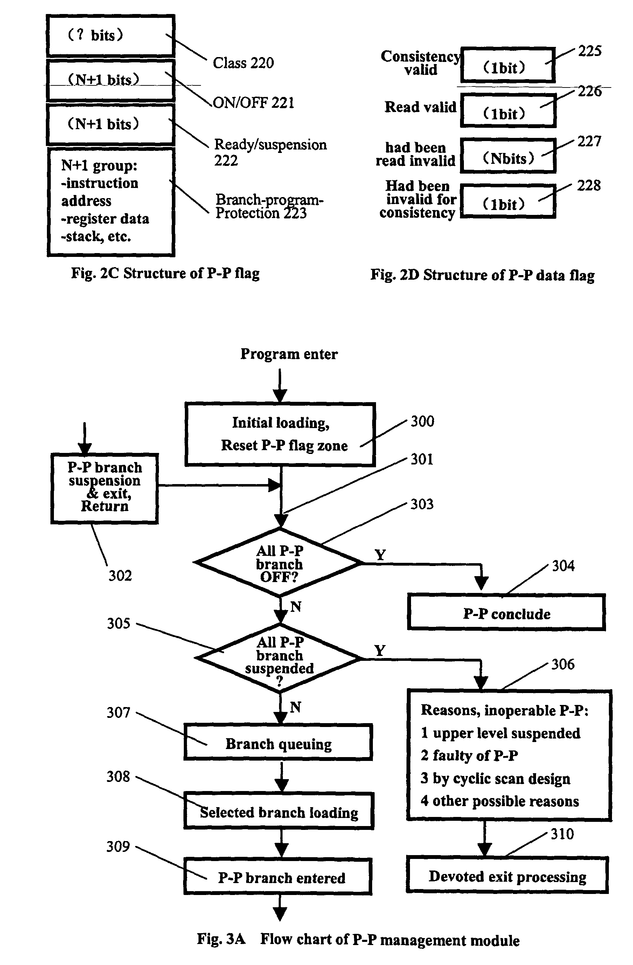

Each P-P comprises a P-P data zone and a devoted flag zone for P-P. P-P data zone keeps P-P data of internal interconnections inside the P-P, and is able to exchange data from outsides of P-P. Devoted flag zone for P-P includes P-P flag (Fig. 2C) and P-P data flag (Fig. 2D).

Fig. 2C is the structure diagram of P-P flag. P-P flag supports software to realize time division processing. There is only one P-P flag for a P-P. The flag includes P-P class flag 220, P-P branch program ON/OFF flag 221 (N+1 bits), P-P branch program ready/suspension flag 222 (N+1 bits), and N+1 groups of branch-programs-protection 223 of P-P (instruction addresses, register data, stack contents, etc.)

P-P class flag 220 is a flag for showing characteristics of P-P, e.g. used to indicate the reasons for suspension once occurred in all P-P branch programs, The reasons may be due to faults, due to suspension reason of father P-P branch programs, or due to cyclic programs waiting for inputs, etc. The flag bit may be established in accordance with the needs of development for P-P classes.

Flag 221 for P-P branch program ON/OFF indicates the status of entering operations and exit from running of P-P branch programs. It has N+ 1 bit. When P-P is in the initial state of entering in, all the N+1 bits are opened to ON. A P-P branch program will be OFF once the P-P branch program is ended. Then all the P-P branch programs are closed and indicate the conclusion of P-P running.

P-P branch program ready/suspension flag 222 indicates the running conditions for P-P branch programs, N+1 bit total for representing N+1 P-P branch programs. Once the branch programs cannot be in running due to invalid P-P data, state of suspension will be entered in. For valid P-P data, the branch program status is then updated to ready. If branch program switch is ON and all branch programs are in suspension, then the P-P is still active but is unable to run.

In each P-P, there is a module 223 of branch-programs-protection. Module 223 includes N+1 group of addresses of branch program interrupt, data of registers, contents of stacks, and other P-P branch program information.

P-P flag zone is devoted to P-P and is dynamic in nature. P-P flag should be loaded in before initiation of P-P. Entry addresses of P-P branch programs should also be loaded in, and On/off flag will be put to ON position in accordance with the number of P-P branch programs. Protection and loading are needed during suspension and return back. However, after the conclusion of P-P, these flags will be useless.

Fig. 2D is the structure diagram of P-P data flag. P-P data flag is to be used in the synchronization and transmission processes of P-P branch programs realized by software methods. Each P-P data (or P-P data block) has a corresponding P-P data flag composed of 1 bit of "consistency valid", 1 bit of "read valid", N bits of "had been read invalid", and 1 bit of had been consistency invalid.

"Consistency valid" flag 225 is of 1 bit, representing that the data had already been written by certain P-P branch program and then consistency operation is allowed for that data. Valid flag is established after the data was written in. Tests will be done before P-P data consistency operations. In case of invalid, N+1th consistency branch program will be entered into suspension. If consistency flag 225 is set as N bits, the branch program that had written the P-P data could be indicated.

"Read valid" flag 226 is 1 bit, indicating that the data had already been in consistency and is a valid data and suitable for being read by P-P branch programs. Valid flag is established after P-P data consistency operation. It is tested before data read. If it is invalid, the read is then invalid and that branch program is going into suspension.

Flag 227 "had been read invalid" has N bits. It denotes that this P-P data had been read by the P-P branch program but the data is invalid. N bits are used to represent N invalid read made by N P-P branch programs. They are set after reading P-P data but invalid. They are tested after writing P-P data, and if the test is valid, the flag for P-P branch program change to ready from suspension.

Flag 228 "had been invalid for consistency" has 1 bit. It denotes that the P-P data had been executed with operation of consistency, but the P-P data is invalid and operation of consistency was not executed. The flag is set up after an invalid P-P data consistency. Flag is checked after writing P-P data if flag is valid, the flag for P-P branch program changes to ready from suspension.

P-P data flag is needed in the operation of P-P. It will be useless after the conclusion of P-P. Therefore, flag should be liquidated in advance and the working memory should be released after conclusion.

For P-P flag, method of Fig. 1B needs no those flag and it is simple in structure. Memory space and operating time for the program can be reduced. With the introduction of P-P flag and management module, software method can transplant P-P functions into single machine environment. It is almost same that the modeling of Fig2A compares with the modeling of Fig1B. However, N+1 branch programs in Fig2A are still kept independent structures in running. Meantime, since there is an addition resource of N+1th program, the P-P in this invention will support to resolve some functions that are not supported by current software technology in single machine environment.

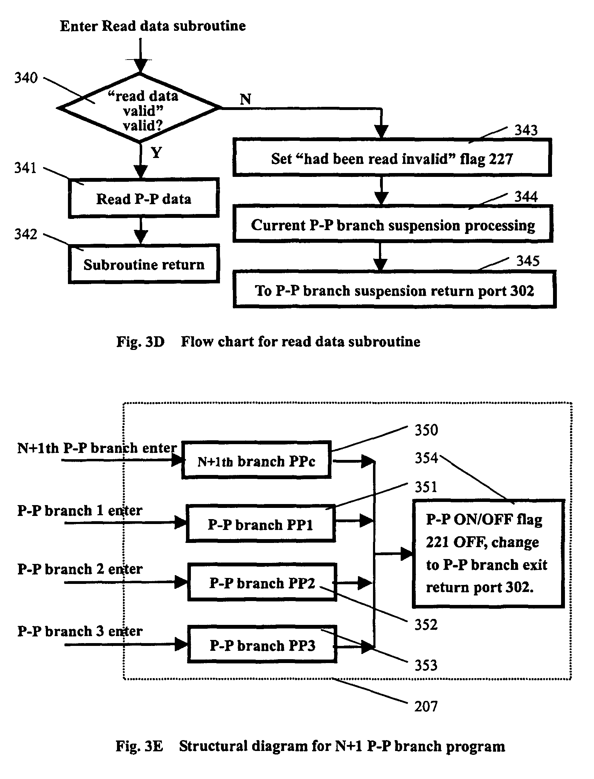

Fig. 3A is the flow chart of P-P management program. This flow chart includes P-P entering & exit management module 210 and N+1 P-P module 200. Its functions are:
● Let P-P behaves externally as a serial type program section and can be entered in with modes of Jump or Call, and exited with the mode of return.
● To realize time-division-management for N+1 branch programs of P-P.
● To realize management for P-P flags.
● To provide priority mode of P-P branch program queue.

Following management flags for P-P will be processed by flow chart:
● P-P flag management (P-P branch program ON/OFF, suspension/ready, class flag).
● Protected zone of P-P branch programs (information of all P-P branch programs includes interrupt addresses, register contents, stack contents, etc.).

The operating principle of flow chart is as follows: There are two entry ports in the flow chart, entry port of initialized processing 300 and entry port of P-P branch program suspension or exit return 302. Entry port of 300 is initiated by dispatch of external program. Subroutines of read data invalid or consistency data invalid in branch program will send out P-P branch program suspension or quit return 302. Branch program suspension or quit return 302 comes from the return instruction after the conclusion of branch programs running. Among which:
● Initialization 300 includes the loading of P-P parameters and set zero of P-P flag zone. Initialization loading includes the setup of ON status for N+1 P-P flag, set up of entry port addresses of P-P branch programs, and set up of initialization value for corresponding registers. To clear P-P flag zone is to clear the P-P flag zone and P-P data flag zone.
● Entry port of module 302 denotes that a new executable P-P branch program should be defined by time-division-managing module 201 for the need of operation of P-P.

After going into 301, these two entry ports will enter into conclusion step 303 for P-P branch program to check the flag 221 of P-P ON/OFF switch. If a P-P branch program is ON, procedure 305 is being entered. Suspension status of branch program is checked. If all the status is OFF, i.e. the P-P is concluded and going to procedure 304. Records of parallel procedure conclusion and connection modes of external programs are preceded.

Suspension-check procedure 305 of P-P branch program checks the flag 222 of P-P ready/suspension. If the check result of procedure 305 is that all P-P branch programs are in suspension, i.e. although some P-P has not yet been concluded, that the P-P could not be executed again. Then the state is turned to procedure 306 to find out the causes of why the P-P could not be executed and the operation is changed to procedure 310. Process of P-P quits. The causes of impeding the execution of P-P are possibly:
● In normal condition of operation, P-P embedding is the P-P call for initiating father P-P branch program. Now the fact of an inoperable P-P denotes that the branch program of father P-P of this P-P is suspension. Therefore, it is necessary to quit this P-P and return to the time-division-managing module of father P-P, and another father P-P branch program should be dispatched. Then, the P-P should be quit in the condition of carrying suspension flag. So that the father P-P branch program of that P-P module is going to the condition of suspension.
● If there was a fault with P-P module, then the process is entering into fault condition.
● The program design is for scanned cycling, awaiting the external inputs such as from keyboard.
● For others, this invention will not give discussions and reasoning.

If procedure 305 gave results that there are P-P branch programs in ready condition. Procedure 307 of branch program queuing will be entered in. Procedure 307 of branch program queuing is to select a P-P branch program of ready condition, then it is changing to loading procedure 308 of selected branch program. The selection method is actually the queuing rules of branch programs situated in ready conditions. Priority rules can be designed during programming and be implemented in compiling. The simplest rule of priority is cyclic queuing. Procedure 307 follows the rule of cyclic sequencing and checks for the ready status of P-P branch programs.

After the procedure 307 had determined the next P-P branch program for running. Procedure 308 processes the parameter loading of the P-P branch program, and restores the previous condition of suspension for the P-P branch program. When the loading is done, procedure 309 is entered in. The selected P-P branch program is going to run.

Time division operation of N+1 P-P branch program is the basic method of P-P. According to different environment of applications, the structure of P-P could be revised and developed. Time division operation can be belonging to either operating system, or user's program.

According to the flow chart of this figure, an eligible software engineer can do the practical operating program should be of no difficulty. In the meantime, update or revision made on the basis of the core flow of this figure is possible or imaginable. There are variations in many aspects, for example, the development of a time division method is to add on a time slice as an branch program exchanging condition, so that when the running time of a P-P branch program is longer than the number of time slices, the branch program enters into suspending status.

According to previous technology, the principle of Sequence-net imposes requirements of checks for valid states for P-P data in the processes of read data instruction, write data instruction, and data consistency instruction. In previous technology and a multiple machine environment, the check result is connected to a interrupt program. In this invention, based on the check results, software simulated subroutine is connected directly to the corresponding processing program, then data consistency processing of P-P branch program and synchronization of programs are realized.

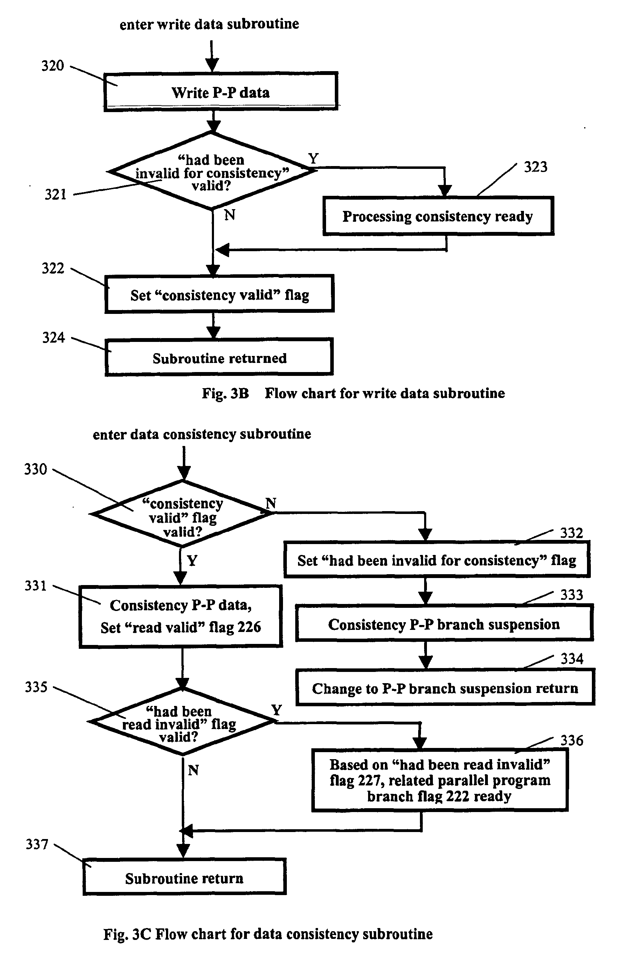

Fig. 3B, Fig. 3C and Fig. 3D of this invention are the implementation examples of software simulated three Sequence-net instructions and their processing. Data token simulated by software requires P-P data flag which should be set up for each data (as shown in Fig. 2D). During the operations of write, read, and consistency operations of P-P data, those P-P flag is tested and processing operations for the flag bit is done. The results are that software simulated instructions of read data, write data, and data consistency are three independent subroutines. The flow charts of these subroutines are shown in Fig. 3B, Fig. 3C, and Fig. 3D. The suspension-processing module 202 of P-P branch program is also software simulated in these subroutines.

Fig. 3B is the flow chart of write data subroutine. In numerical computation, the P-P write data instruction is to write the operation of a P-P data. It is a subroutine in single machine environment. Or it is a statement in the environment of C language. In the condition of software simulated write data instruction, the processing of data status flag should be added in subroutine. Also a discrimination of "had been invalid for consistency" 228 and the processes followed should also be added.

The principle of flow chart of write data subroutine is described as follows. Firstly, write data subroutine enters write data procedure 320 to realize write operation of a P-P data, and then enter procedure 321. Procedure 321 checks for "had been invalid for consistency" flag 228. If flag 228 is valid, it denotes that the data had been in data consistency operation. However, as the consistency flag is invalid, consistency operation was not operated in fact. Consistency (N+1th) P-P branch program was entered into suspension. Then, since write data procedure 320 had been executed and the data is valid. Procedures 323 can be entered in and change the consistency program into ready. The situation of ready denotes that for consistency (N+1th) P-P branch program status bit 222 is changed to ready from its original status of suspension. Then the procedure 322 is entered in. If flag 228 of procedure 321 was invalid, it denotes that the data had not been operated with consistency operation and directly changed to procedure 322. Procedure 322 set the "consistency valid" flag 225 to denote the data is valid. Consistency operation to this data by consistency P-P branch program 100 is allowed. Then change to procedure 324. Procedure 324 is for the return back of write data subroutine.

Fig. 3C is the flow chart of data consistency subroutine. In numerical computation, data consistency instruction of P-P data is a transmission operation of P-P data and also is an operation of determining validity of P-P data. It is a subroutine in single machine environment. In condition of software simulated data consistency instruction, additional items should be added into subroutine, including data status flag processing, valid check for consistency token, check for "had been read invalid", and necessary processing after checks were made.

Working principles of flow char of data consistency subroutine are as follows: Firstly data consistency subroutine enters procedure 330. "Consistency valid" flag 225 of this data is checked. If "consistency valid" flag of the data in procedure 330 is invalid, it shows that the data has not yet been written. Therefore, N+1th branch program can not be run and enters suspension. The program enters into procedure 332. In procedure 332, "had been invalid for consistency" flag 228 is set. Then operation is changed to Procedure 333 for N+1th P-P branch program entering suspension. Procedure 333 is the method of realizing module 202 by software. Then operation is changed to procedure 334 and quit from the P-P branch program. It is changed to the entry port of 302 so that new P-P branch program can be selected again.

After checking the "consistency valid" flag 225 of the data in procedure 330, if flag 225 valid, that is to say the data had been written, and the data consistency can be operated. Then it is changed to procedure 331. Procedure 331 executes consistency operation for data and token. In software simulation of single machine, no actual data is sent. Only "read valid" flag 226 is set. Then it is changed to procedure 335 to check "had been read invalid" flag 227 of the data. "Had been read invalid" flag has N bits, representing corresponding to N different P-P branch program (N+1th consistency P-P branch program is using "had been invalid for consistency" flag 228). If "had been read invalid" flag 227 of procedure 335 is valid (i.e. at least one bit of N bits of flag 227 is valid. To the most, all N bits are valid.) Then it denotes that "had been read invalid" had happened with some P-P branch program. Suspension status had been changed on. Since procedure 331 had executed consistency operation, and then it is changed to procedure 336. According to the content of "had been read invalid" flag 227, procedure 336 changes the status of relevant P-P branch program from suspension to ready. Then procedure 337 is changed on. If there is no any sign in "had been read invalid" flag 227 in procedure 335, then no "had been read invalid " has been appeared. Procedure 337 is changed on directly.

Procedure337 is the return back of data consistency subroutine.

Fig. 3D is the flow chart of read data subroutine. In numerical computation, read data instruction of P-P is an operation of picking up a P-P data. In single machine environment, it is a subroutine. Under the condition of read data instruction simulated by software, subroutine should be added with the processing of data status flag, test of the validity for a data, and necessary processing after test.

The working principles of flow chart of read data subroutine are that: firstly, read data subroutine enters into procedure 340 to check "read valid" flag 226 of the data. If the "read valid" flag of the data in procedure 340 is valid, it denotes that the data has been written and been transferred for consistency. The program enters into read data procedure 341. Procedure 341 is the routine mode of single machine program of read data. After data was read, procedure 342 is entered in. Procedure 342 is the return of read data subroutine. If the "read valid" flag of data is invalid, it denotes that the data is currently invalid (The P-P branch program should be suspended). The program is entering into procedure 343.

Procedure 343 is used to set the "had read invalid" flag 227. "Had read invalid" flag 227 has N bits, corresponding to different P-P branch program. Procedure 343 sets P-P data flag 227 and sets the "had read invalid" flag of corresponding P-P branch program. Then it is changing to procedure 344.

Procedure 344 is used for processing the suspension of current P-P branch program. Its content is to save the current running condition of P-P branch program. So that it can be used for the condition of returning of this P-P branch program. Procedure 344 is the method of realizing module 202 by software. Then it is changed to procedure 345. Procedure 345 is used for quit of the P-P branch program and changing to the entry port of 302.

Fig. 3E is the branch program structure of P-P. P-P has N+1 P-P branch programs. N+1 branch program PPC 350, PP1 351, PP2 352, PP3 354, all of them are independent structure of program modules. Not only it is independent in the stage of programming, but also independent in compiling and the stage of machine code. The initialization of P-P branch programs is designated by module 201. When all P-P branch programs quit from running, procedure 3 54 is changed on. Procedure 354 is an operation of transferring to entry port of 302.

N+1 P-P have internally three specific P-P subroutines to process read, write and consistency operations of P-P data. Since the simulation in single machine environment is done by software. Each P-P data needs respective flag for P-P data. Once the read or consistency subroutine is tested, and the test results showed that the P-P branch program could not be executed again. Module 202 processes the suspension of P-P branch program and then changes to the time-division managing-module 201. Once the write or consistency subroutine is tested and the test results determine that the condition of exiting suspension of other P-P branch program has been satisfied. The subroutine changes the processing of other P-P branch program into ready, and then returns back. The processing flows of these subroutines have been stated in Fig. 3B, Fig. 3C, and Fig. 3D. Once N+1 P-P are organized, the P-P branch programs will contain these subroutines.

The P-P flag of this invention is needed for software simulation of P-P. As compared with Fig. 1B, they should maintain the increments produced by P-P structure and functions in single machine environment.

N+1 P-P branch program 207 is the interface of user programming, in which N P-P branch programs PP1 351, PP2 352, PP3 353 are single machine routine programming in nature, but added with parallel data write/read of shared memory mode. In programming, they are changed to use the format of above-mentioned subroutine replacing shared memory write/read. As this is the key difference in programming, so it can be recognized that the programming in this invention is in the same way as traditional programming.

N+1th branch program 350 is also an independent program. It is different from average programs that it contains no numerical computation. It contains a sequence of P-P data and an operation of "consistency" for P-P data. As shown in Fig. 3C, there is a subroutine P_CONSIS_SUB of consistency operation, N+1th P-P branch program PPs 350 is actually the operation for m data contained in P-P.

| | |
|---|---|
| START PP 123 | ; entering N+1th branch program of P-P123 |
| PP123_DATA1 | ; defining first P-P data of P-P123 |
| P_CONSIS_SUB | ; first consistency of P-P data of P-P 123 |
| PP123_DATA2 | ; defining second data of P-P of P-P123 |
| P_CONSIS_SUB | ; second consistency of P-P data of P-P123 |
| ..... | |
| PP123_DATAm | ; defining (m)th data of P-P of P-P123 |
| P_CONSIS_SUB | ; (m)th consistency of P-P data of P-P123 |
| END PP 123 | ; end of N+1th branch program of P-P123 |

PP123_DATA1 defines first P-P data of P-P 123. In fact, what is defined is the relevant parameter of P-P data for execution by subroutine P_CONSIS_SUB.

The example listed above is the simpler than the most fundamental example of N+1th program. Its special feature is that it is a program in capable of driving the effective execution of P-P data consistency, and coordinates the synchronous running of N+1 P-P branch programs. Structurally, the P-P data sequence and the P-P data can be separated (with other functions of P-P). As a program, sequential execution of P-P data consistency is just a very simple function. More resources can also be developed, for example, realizing the variations of sequence of P-P data, increasing or decreasing P-P data, inserting in with call-permission-instruction for Call P-P, etc.

An eligible software engineer should be with no difficulty in programming software for above-mentioned N+1 P-P branch programs. In the meantime, update or revision based on flow chart of this invention should also be possible.

Previous technology and the description on P-P structure of this invention were concentrated on the computation functions of parallel flow chart. However, the real target of this invention is not only the intrinsic characteristics of data computation of a parallel flow chart, but also the intrinsic values of P-P in the new construction in single machine environment. The intrinsic values may not be able to be described by functions similar to P-P flow chart. In addition to features of producing P-P data sequence, supporting embedding structure of P-P, new resources produced by P-P structure of this invention are also included. That is to say, in conditions (which user faces to) of P-P branch programs of N (or N+1) independent modular structures, another program resources of N+1th (consistency) P-P branch program 350 and another P-P management modules (including modules 201 and 210) with plenty of capabilities are appeared.

Implementation examples for new resources of this invention are as follows:
1. "P-P data + sequence" characteristics of P-P modules.
   N+1th P-P branch program executes P-P data sequence and makes P-P data sequence the external characteristics of P-P package. That is to say, if P-P is a object orientated class or internal structure of the object, its external characteristics of package is not limited to have one element for data, but is changed to have two elements, P-P data and P-P data sequence. The conclusion is that real time characteristics will be presented in the class of objects of object-orientated technology. For example, the time relation of these data indicates serial running with certain sequential relation, however, the order of arrangement should not be changed.
   "P-P data + sequence" can indicate the dynamic execution characteristics of the object, and is helpful to create novelties of object orientated technologies. Whereas in current object orientated technologies, its class package had only involved with one element, data. Its situation is similar to a special example of the P-P structure of this invention with absence of the important element sequence.
2. On line increment or decrement of P-P branch programs
   In the condition of P-P with characteristic feature of P-P data, a new P-P branch program in complying with the P-P data sequence can be easily added into the P-P. It is equivalent to a bypass program to the P-P structure. Bypass program and P-P share the common P-P data sequence, are featured with independent structure, and can be used for multiple usages such as class heritage, data collection, software testing, operation and monitoring, etc.
3. In users program, P-P can speed up the response of operation.
   Suppose that three sections of program in a user program separately receives three external data arrived in random. In the condition of serial program, it will quit after at the position of first data and then no operation for preliminary stage of receiving other two data. If serial program is changed to P-P with three branch program. The program will perform preliminary receiving stage for all three programs before entering into waiting. Besides, once a data is coming first, the respective branch program enters into running immediately.
4. P-P is the generalized structure of computation process
   Packaged module of P-P had been realized in first time by the P-P structure of this invention. Among which, processing methods such as suspension, ready, etc. are similar to system processes, and have entered into the internal structure of P-P.
   Characteristics of P-P data sequence of the P-P in whole had been stressed by N+1th branch program. In fact, there is no relation between P-P data sequence of N+1th branch program running and the numerical computation results of P-P. Its significance is not on performing computation for a parallel flow chart, but rather on the presentation of special features of P-P computation process. N+1 P-P of this invention is the generalized structure of computation process. With variations in structural parameters, different examples of P-P can be formed as shown in Fig. 1B and Fig. 1C.
   P-P can be easily initiated by a single machine call instruction. The implementation of P-P is extremely convenient.
5. Single P-P data transformed to data block variation
   The difference between P-P data structure and data block structure is that, there is P-P data in Fig. 3D. To use a P-P data flag served for a block data for consistency is possible. For realization, a group of new class of subroutines can be designed, but the structure is still a shared memory structure from the concept of programming.
6. Others
   Those functions such as embedding structure between multiple P-P, paralleled calls of P-P, etc. are specialized functions of this invention used to support various requirements of computer software.

New structural resources have been developed by P-P and paralleled calls. However, the methods of implementation are similar to that of previous technology. An eligible software engineer can understand and implement the uses of these new resources. With the deepening study to be made in future, more developments and discovers will be applied.

## Claims

1. The P-P (parallel program, hereinafter "P-P") modules based on a single machine environment which comprises:
N+1 P-P branch programs module (N≧1), which are run by operating the N+1 independent P-P branch programs, in the way of time division (with the emphasized time division operations which are different from that of parallel computers), for making a transmission and synchronizing of P-P data under the supports of three classes of sequence-net instructions (or subroutines) for reading P-P data, writing P-P data, and making P-P data consistency in said P-P branch programs; and
a managing program module, for supporting the suspension status, ready status, and running status of the P-P branch programs in response to the information from the P-P branch programs.

2. The P-P module of Claim 1, further comprising a suspension-processing module, for processing the suspension status, ready status, and running status of the current P-P branch programs.

3. The P-P module of Claim 1, further comprising a P-P entering & exit management module, for initializing the P-P, for each application and processing the exit of the P-P in response to the information from a time-division-managing module.

4. The P-P module of Claim 1, wherein the N+1th P-P branch program of P-P module executes a P-P data sequence, which is represented by a data consistency operation.

5. The P-P module of Claim 4, wherein a token consistency operation of N+1th branch program corresponds to the P-P data, which is made consistency one by one directly by the control of the N+1th program, wherein if the P-P data has been written by other P-P branch program, then the consistency of the P-P data is executed, otherwise the N+1th branch program is in suspension status, after the execution of P-P data consistency, the P-P data read by other P-P branch program is Valid.

6. The P-P module of Claim 5, wherein, when P-Ps embed and child P-Ps are called, the call-permission of the child P-Ps and the P-P data sequence are controlled and linked by the N+1th branch program.

7. The P-P module of Claim 5, wherein, the said N+1 P-P programs include three types of P-P subroutines for reading, writing, and consistency operations of P-P data, and wherein, the said P-P subroutines have capabilities for setting, checking, and processing tokens, and also capabilities for supporting P-P data transmission and synchronizing of P-P branch programs.

8. An operational method of N+1 P-P branch programs (N≧1) based on single machine environment, which comprises the following procedures:
initialization;
checking if the P-P was terminated, and checking the ON/OFF switch flag of P-P branch program, wherein:
if the switch flag of all P-P branch programs are OFF, then the P-P is shown to be terminated, so the record of recording the termination of the P-P and the manner of connecting with external programs are processed;
once the switch flag of one P-P branch program is ON, the suspension status for the branch programs is checked, wherein,
if the check result is that all P-P branch programs are in suspension status, which indicates that though the execution of some P-P branch programs is not finished, the P-P branch programs can not be further executed, that the reasons of unable to execute the P-P branch programs are being found out, and that the P-P branch programs is to be exited based on the reason;
if the check result shows that more than one P-P branch program are in ready status, the P-P branch programs queuing process is entered in;
selecting a P-P branch program with ready status and proceeding P-P branch program queuing process;,
selecting a P-P branch program and loading its parameters, and restoring the P-P branch program to the status prior suspension;
running selected P-P branch program.

9. The N+1 P-P operation method of Claim 8, wherein, the said initialization process includes the loading of parameters for P-P branch programs and the resetting of the flag zones of the P-P branch programs.

10. The N+1 P-P operation method of Claim 9, wherein, the loading of the parameters of the P-P branch programs includes:
to set the flag ON for the N+1 branch programs of the P-P;
setting the entry addresses for P-P branch programs,
setting initial data for respective registers, and
resetying the P-P flag zone and the data flags of P-P branch programs

11. The N+1 P-P operation method of Claim 8, wherein the said P-P branch program contains a subroutine for writing data, which includes the following procedures:
performing the writing operation for a P-P data;
checking the flag "had been invalid for consistency" of the P-P data; if the flag "had been invalid for consistency" is valid then it should indicate that data consistency process had been made, but the consistency is invalid and the consistency process was not successful, and then the consistency of the P-P branch program should enter in suspension status;
if the flag is valid, the consistency process of P-P branch program should change its ready/suspension flag bit from suspension status to ready status,
if the flag is invalid, flag "consistency valid" should be established and the consistency P-P branch program is allowed to perform the consistency operation to the data, and
exiting the "write data' subroutine.

12. The N+1 P-P operation method of Claim 8, wherein, the said P-P branch program includes a write data subroutine, which contains the following procedures:
checking the "consistency valid" flag of this data, wherein,
if the "consistency valid" flag of this data is invalid, the P-P branch program is suspended;
setting the "had been invalid for consistency" flag,
proceeding suspension for current consistency branch program, saving current operating status of consistency branch program of P-P for the purpose of resuming the P-P branch programs hereafter;
exiting the P-P branch program, and transferring to suspension entry port of P-P branch program in order to re-select new P-P branch program;
if flag "consistency valid" for this data is valid, consistency operations for data and tokens are executed;
checking N bits of flag "had been read invalid" of the data; and then
the data consistency subroutine is returned.

13. The N+1 P-P operation method of Claim 12, wherein during the procedures of checking N bits of flag "had been read invalid" of the data, if the flag "had been read invalid" was valid then the status of relevant P-P branch programs is changed from suspension to ready accordingly.

14. The N+1 P-P operation method of Claim 8, wherein the said P-P branch program contains a read data subroutine comprising the following processing procedures:
checking the flag "read valid" of the data, in case of valid for that flag, the data is read;
exiting read data subroutine.

15. The N+1 P-P operation method of Claim 14, wherein, the following procedures are included in steps of checking the flag "read valid" for the data:
If the "read valid" flag of the data is invalid, set the N bits of "have been read invalid" which correspond to respective P-P branch programs;
suspension treatment is made to current P-P branch procedures, current operating status of P-P branch programs are saved for later usage when the P-P branch program is returned and continuous operation could be succeeded from the suspension point;
to quit from the P-P branch program, transfer to suspension entry port of the P-P branch program, and re-select new P-P branch program.
